# EUROPEAN PATENT APPLICATION

(11) **EP 1 069 549 A1**
(43) Date of publication of application: **17.01.2001**
(21) Application number: 00902856.4
(22) Date of filing: 08.02.2000
(51) Int. Cl.: G09G 5/22, G09G 5/24

(54) **CHARACTER INFORMATION TRANSMISSION SYSTEM**

(30) Priority: 08.02.1999 JP 6881099
(71) Applicant: Polytech Co., Ltd., Mishima-shi, Shizuoka 411-0041 (JP)
(72) Inventor: YAMANAMI, Tsuguya Kabushiki Kaisha Inta Shisukomu, Kamimashiki-gun, Kumamoto 861-2202 (JP); IZAWA, Kiyosato Polytech Co., Ltd., Mishima-shi Shizuoka 411-0041 (JP)
(74) Representative: Horner, David Richard
(86) International application number: JP0000674
(87) International publication number: WO0046784

(57) **Abstract**

When document data is transmitted as an electronic mail between terminal devices in the areas in which a different natural language has been used, or when document data in a special font which cannot be read by a destination terminal device is transmitted, the document data is displayed on the display of the destination terminal device based on coordinate notation character font data that is data on the positions of display points representing each character. Thereby, correct character display can be performed without a ghost of character in the destination terminal device.

## Description

### Technical Field

The present invention relates to a character information transmission system, and is applicable to, for example the case of transmitting an electronic document through the Internet.

### Background Art

When electronic documents e.g. electronic mails are transmitted in Internet environments, a standard character code (such as American Standard Code for Information Interchange (ASCII code)) has been preliminarily used as the character code of each character forming the electronic mail to reduce the information amount of document to be transmitted on the Internet.

Therefore, if using character codes which correspond to natural language's characters used in each area of the world, electronic mails can be transmitted between countries. However, in the case where a natural language used in a sending terminal device of an electronic mail does not coincide with a natural language used in a destination terminal device, if a server connected to the above destination terminal device does not prepare a database to convert the character codes, also with respect to the same character code, the destination terminal device reads that it received a character that is different from a character being allocated in the sending terminal device (so-called "ghost of character" occurs).

To avoid such inconvenience, it is considered that it is good that the server connected to the destination terminal device provides a database for character code conversion correctly readable with respect to the all natural languages in the world. However, it is not practical because the scale of such database becomes massive.

Moreover, when in using such a terminal device having a small configuration as a cellular phone as a destination terminal device, there is a problem that the character fonts of many kinds of natural languages cannot be displayed due to a mounting problem.

### Disclosure of Invention

Considering the above points, the present invention has been done, and provides a character information transmission system in which a document written in any font can be correctly displayed on a destination terminal device.

To solve the above problems, according to the present invention, character font converting means is provided in a transmission network connecting between a sending terminal device and the destination terminal device. By the above character font converting means, transmission data transmitted from the sending terminal device is converted into coordinate notation character font data that is composed of coordinate data (X,Y) for representing the display positions of display points forming the segments of each character forming document data and interpolation display data (Z) for interpolating a space between display points.

The character font converting means has a coordinate notation character font database which includes coordinate notation character font data corresponding to a character to be used. The character font converting means searches this coordinate notation character font database according to first document data transmitted from the sending terminal device, and converts this into second document data being coordinate notation character font data.

The coordinate notation character font data will be generated by a method that in a series of first display points to display the segments of each character, second display points which are at the positions intermittently separated are selected, first and second coordinate data (X,Y) for representing the coordinate location of the above second display points are generated, and interpolation display data for interpolating and displaying a space between two display points that have been represented by the first and the second coordinate data (X,Y) and mutually next to by plural third display points is generated, and second document data to be transmitted to the destination terminal device is generated according to thus generated first and second coordinate data (X,Y) and interpolated value data.

In areas in which the natural languages are different, also with respect to a terminal device not preparing a character font code to mutually convertible as normal character font data, document data can be converted into coordinate notation font data for representing the positions of the display points of a character and displayed in the terminal device. Thereby, transmitted character can be correctly displayed without occurring a ghost of character only by simply replacing the above coordinate notation character font data by on an image memory.

Moreover, also when a document having a character in a special font that cannot be read in a destination terminal device is transmitted, the character as it is in the above special font can be correctly displayed on the display of the destination terminal device.

### Brief Description of Drawings

Fig. 1 is a schematic systematic diagram showing a character information transmission system according to the present invention.
Fig. 2 is a schematic diagram for explaining a coordinate notation character font.
Fig. 3 is a schematic diagram for explaining a scheme for determining writing data with respect to segments that form a character.
Fig. 4 is a schematic diagram showing how to define character font data.
Fig. 5 is a schematic diagram showing kinds of dot-shape data.
Fig. 6 is a schematic diagram showing the arrangement of dots that are different in size.
Fig. 7 is a schematic diagram showing the way of performing the brush display of a segment.
Fig. 8 is a schematic diagram showing a normal character font.
Fig. 9 is a schematic perspective view illustrating the detailed configuration of a coordinate notation character font generator.
Fig. 10 is a systematic diagram showing a data processor in the coordinate notation character font generator.
Fig. 11 is a flowchart showing a character font generating processing routine.
Fig. 12 is a schematic diagram for explaining the timings of a pen-down, a pen moving and a pen-up events.
Figs. 13(A), 13(B) and 13(C) are flowcharts showing event processing routines.
Fig. 14 is a table chart showing a character font coordinate table.
Fig. 15 is a flowchart showing a registering processing routine.
Fig. 16 is a table chart for explaining table converting processing.
Fig. 17 is a table chart showing the configuration of a coordinate notation character font database.
Fig. 18 is a schematic perspective view for explaining the correction mode of the coordinate notation character font generator.
Fig. 19 is a schematic perspective view showing the detailed configuration of a terminal device.
Fig. 20 is a systematic diagram showing a data processor for the terminal device.
Fig. 21 is a flowchart showing a document reading processing routine.
Fig. 22 is a systematic diagram showing the configuration of a character font converting server.
Fig. 23 is a flowchart showing a document converting processing routine.
Fig. 24 is a schematic diagram showing dot-shape data to which twist information has been added.
Fig. 25 is a schematic diagram showing another embodiment of a character information transmission system.

### Best Mode for Carrying Out the Invention

### (1) General Configuration of Character Information Transmission System

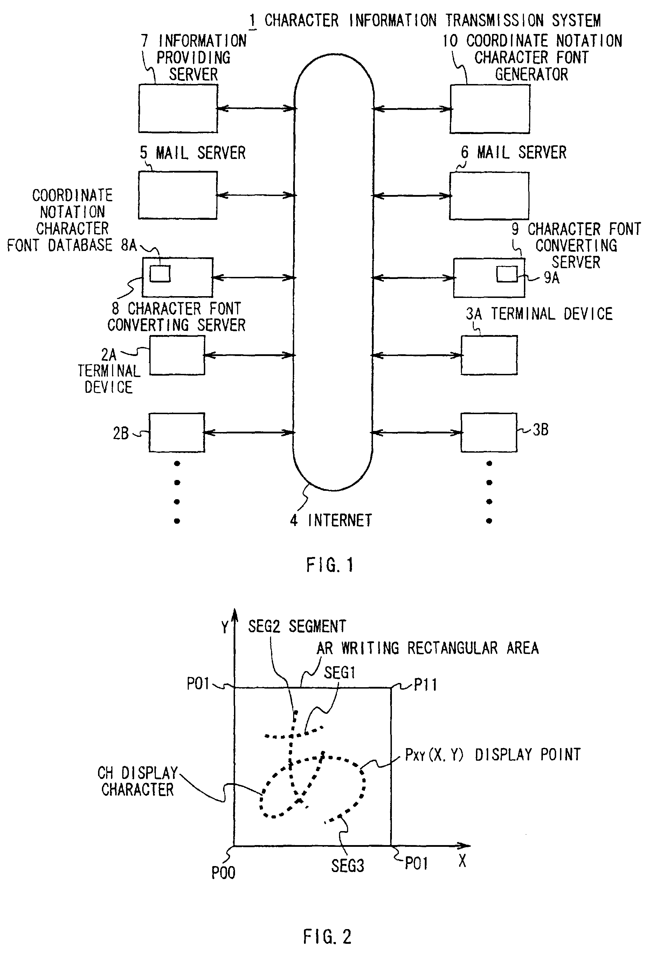

Referring to Fig. 1, 1 generally shows a character information transmission system. A group of terminal devices respectively having plural terminal devices 2A, 2B ..., 3A, 38 ..., ... each of which is a general purpose personal computer, a cellular phone or the like is connected to the Internet 4. The transmission of an electronical mail can be mutually transmitted by mail servers 5, 6 ... respectively connected to the terminal device 2A, 2B ..., 3A, 3B ..., ... (normally, the mail servers of a provider or the like has been used) in the group of terminal devices through the Internet 4.

In addition to this, each terminal device 2A, 2B ..., 3A, 3B ..., ... can respectively read desired electronical document information from an information providing server 7 (being an Web server).

In each mail server 5, 6 .., a character font converting server 8, 9 ... has been provided. When transmitting an electronic mail or reading an electronic mail from the terminal device 2A, 2B ..., 3A, 3B ..., ..., or when reading information from the information providing server 7, coordinate notation character font data can be obtained from the character font converting server 8, 9, ... as character display information on a character to be displayed on the display of the terminal device 2A, 2B ..., 3A, 3B ..., ...

Here, the coordinate notation character font data is defined by coordinate location information for specifying the display positions of display points that represent a segment forming each character on the display.

In case of this embodiment, the character font converting servers 8, 9, ... have been provided as the equipment of a provider respectively corresponding to the mail server 5, 6, ...

The character font converting servers 8, 9, ... have coordinate notation character font database 8A, 9A, ... for converting character data defined by a standard character code (e.g., Hyper Text Markup Language (HTML)) into a coordinate notation character font.

When for example, the terminal device 2A, 2B ... prepares the document of an electronic mail to transmit to the terminal device 3A, 3B ..., a user prepares a document being HTML data with the sending terminal device 2A, 2B .. and transmits it to the mail server 5 through the Internet 4 as an electronic mail. The mail server 5 transmits the above electronic mail to a destination mail server 6 connected to the destination terminal device 3A, 3B ...

At this time, the destination mail server 6 converts the HTML data transmitted as the electronic mail into display data in a coordinate notation character font by means of a coordinate notation character font database 9A in the character font converting server 9 and displaying it on the display of the destination terminal device 3A, 3B ...

Oppositely to that, when the terminal device 3A, 3B ... transmits an electronic mail to the terminal device 2A, 2B ..., a user prepares a document being HTML data with the sending terminal device 3A, 3B ..., and transmits this to the mail server 6 through the Internet 4 as an electronic mail. The mail server 6 transmits the above electronic mail to the destination mail server 5 connected to the destination terminal device 2A, 2B ...

At this time, the destination mail server 5 converts the HTML data transmitted as the electronic mail into display data in the coordinate notation character font by means of a coordinabe notation character font database 8A in the character font converting server 8 and displaying it on the display of the destination terminal device 2A, 2B ...

And when a user reads desired information from the information providing server 7 through the terminal device 2A, 2B ..., 3A, 3B ..., ..., HTML data obtained as the above reading information is converted into coordinate notation character font data using the coordinate notation character font database 8A, 9A, ... in the character font converting server 8, 9, ..., and it is displayed on the display of the terminal device 2A, 2B ..., 3A, 3B ..., ...

Therefore, even if transmitted character information is in any character form (i.e., font) using a natural language in any country, or even if it has a special character form, each of the terminal devices 2A, 2B ... and 3A, 3B ... can display the above character form on the display as it is.

In this connection, generally, character information to be transmitted through the Internet 4 has been respectively defined so as to have a code that is peculiar to each natural language. So that, if there is a terminal device which cannot decode the above definition, a problem that a correct character cannot be displayed on the display as so-called "ghost of character" character occurs. However, even if the terminal devices 2A, 2B ..., 3A, 3B ..., ... do not have the ability to decode the character codes defined corresponding to the natural languages, the coordinate notation character font database 8A, 9A in the character font converting server 8, 9, ... can display the transmitted character information on the display without an error by displaying it on a display position specified by the coordinate notation data.

The coordinate notation character font data in the coordinate notation character font databases 8A, 9A, ... has been generated in a coordinate notation character font generating device 10, and distributed by for example, downloading onto the coordinate notation character font databases 8A, 9A in the character font converting servers 8, 9, ... through the Internet 4.

### (2) Generating Principle of Coordinate Notation Character Font

The coordinate notation character font generating device 10 generates a coordinate notation character font according to the following generating principle.

The coordinate notation character font will be generated as shown in Fig. 2, by defining a writing rectangular area AR on an XY coordinate having an origin P00, representing a display point PXY in the rectangular area surrounded by points at the four corners P00, P01, P11 and P01 by an X-coordinate value X and a Y-coordinate value Y, writing one display character CH (including a character such as a code or the like to be used along with a character in a document) in the rectangular area AR, and representing the writing locus by the coordinate value (X,Y) of the display point PXY.

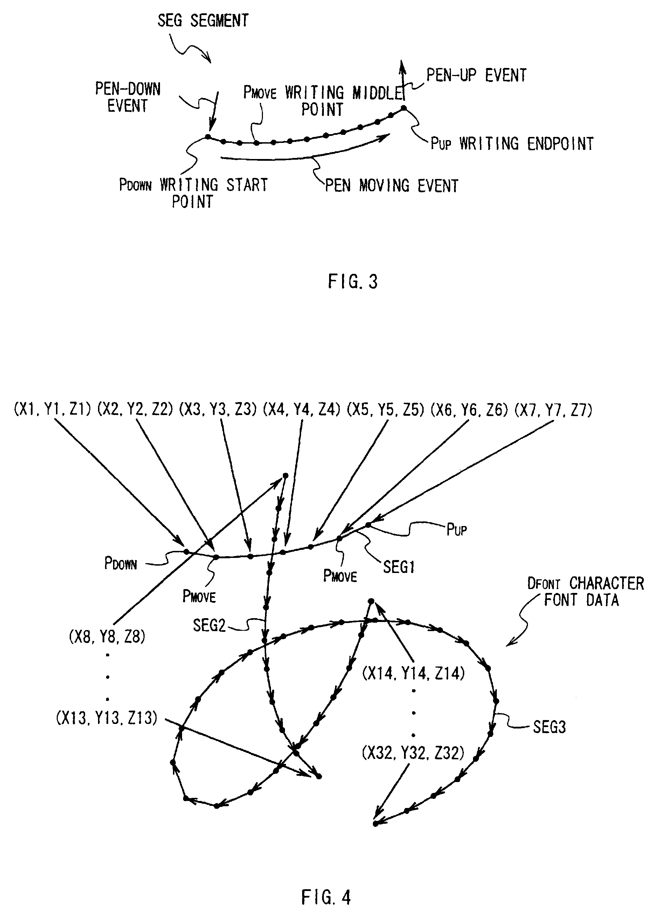

The display character CH is composed of plural segments SEG (including having a linear shape and a dot shape) written by one brush of a writing tool, e.g. a pen. Each segment is defined as that has been written by an operation for starting writing by putting down the pen (this state is referred to as pen-down event), and then passing an operation for horizontally moving the pen (this state is referred to as pen moving event), and then an operation for stopping the writing by raising the pen (this state is referred to as pen-up event). Thus, as shown in Fig. 3, each segment SEG will be represented by the XY coordinate value of a writing start point PDOWN where a pen-down event was generated, the XY coordinate value of a writing endpoint PUP where a pen-up event was generated and the XY coordinate values of writing middle points PMOVE obtained by sequentially intermittently taking pen moving points from the writing start point PDOWN to the writing endpoint PUP.

In case of Fig. 2, with respect to a Japanese "hiragana" character 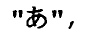 a first , a second and a third segments SEG1, SEG2 and SEG3 are sequentially defined on the XY coordinate. Thereby, as shown in Fig. 4, as one character font data DFONT, with respect to the first segment SEG1, the location data (X1,Y1) of the writing start point PDOWN is specified, next, the location data (X2,Y2) ... (X6,Y6) of plural writing middle points PMOVE are specified, and then, the location data (X7,Y7) of the writing endpoint PUP is specified.

Similarly, with respect to the second and the third segments SEG2 and SEG3, location data (X8,Y8) ... (X13,Y13) and (X14,Y14) ... (X32,Y32) are specified.

In this manner, the character font data DFONT has the XY-coordinate values of the writing start point PDOWN, the writing middle points PMOVE and the writing endpoint PUP of each segment as first dimensional data and second dimensional data. In addition to this, with respect to the writing start point PDOWN, the writing middle points PMOVE and the writing endpoint PUP, the character font data DFONT has dot-shape data Z for representing "kinds of dot shapes" to be used as interpolation data at each of that positions, as third dimensional data (it is referred to as Z-axis data).

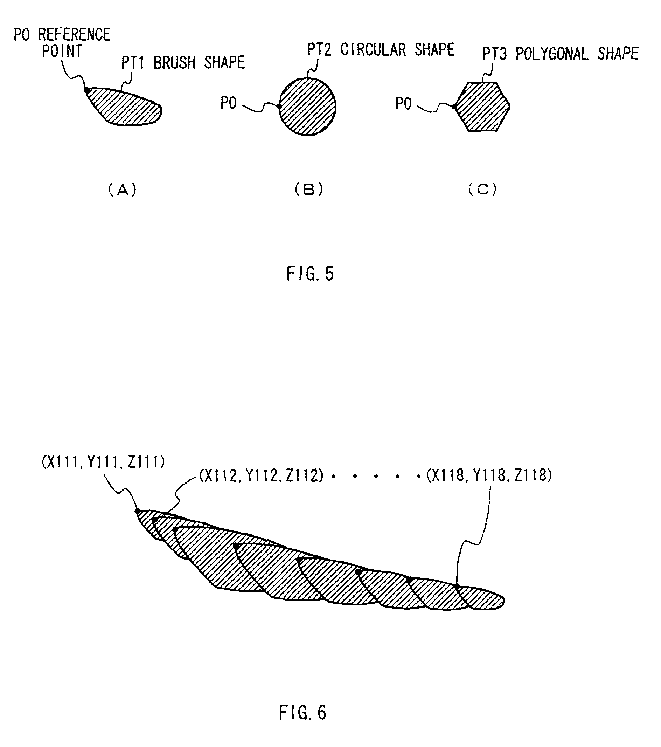

In case of this embodiment, as dot-shape data shown in Figs. 5(A), 5(B) and 5(C), brush-shape data PT1, circular shape data PT2 and polygonal (e.g. hexagonal) shape data PT3 have been prepared, and plural pen shapes which are different in size can be respectively selected with respect to each of the dot-shape data PT1, PT2 and PT3.

In case of Fig. 4, dot-shape data (Z1...Z7), (Z8...Z13), (Z14..Z32) are respectively added to the location data of the respective display points (X1,Y1) ... (X7,Y7), (X8,Y8) ... (X13,Y13) and (X14,Y14) ... (X32,Y32), so that the character font DFONT is represented by three-dimensional data (X1,Y1,Z1) ... (X7,Y7,Z7), (X8,Y8,Z8) ... (X13,Y13,Z13), (X14,Y14,Z14) ... (X32,Y32,Z32).

By regarding the respective one display point as a reference point P0, the each dot-shape data PT1, PT2, PT3 is composed of a group of display point location data in which the display position of a display point of each dot shape is represented by a group of XY coordinate data relative to the reference point. On the image memory, each of the dot-shape data PT1, PT2 and PT3 writes location data for representing each display point in a dot shape in the state where the reference point P0 has been adjusted to the writing start point PDOWN, the writing middle point PMOVE and the writing endpoint PUP. Thereby, dot shapes shown in Fig. 5 can be displayed on the display.

In this manner, since the dot-shape data (Z) that represents a kind of dot shape as the third dimensional data of the character font data DFONT is defined as the interpolation data, in each of the segments SEG1, SEG2 and SEG3, spaces between display points that are next to are interpolated and displayed, and thus, unbroken segments can be displayed.

For instance, with respect to the brush shape PT1, as shown in Fig. 6, if third dimensional data (Z111), (Z112) ... (Z118) which are sequentially different in size are selected, a character font having a brush shape as the entire segments can be formed.

Here, with respect to the writing start point PDOWN, the writing middle point PMOVE and the writing endpoint PUP, if large-dot-shape data is allocated to a display point where the strength of a penstroke is large according to the strength of a penstroke, the feel of a material peculiar to a brush character can be represented on a display.

Furthermore, if the specified size is changed in case of using the circular shape PT2 or the polygonal shape PT3 is used, the thickness of the segments of a character font to be displayed can be changed as the occasion demands.

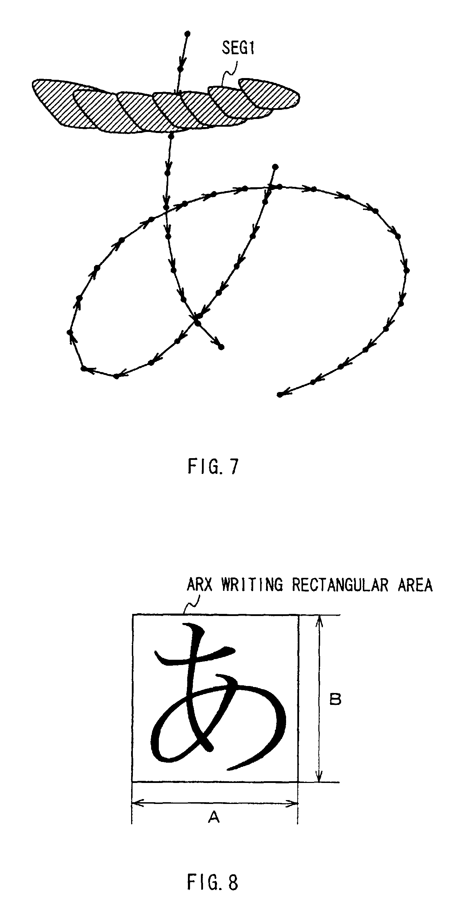

For example, with respect to the first segment SG1 of the Japanese hiragana character 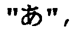 a character font having brush display shown in Fig. 7 can be generated.

In this manner, if a pen shape (including the outer shape and the size of a dot) is specified as the third dimensional data (Z) as well as specifies intermittent display points on each segment as the first-dimensional and the second-dimensional data (X,Y), a character font which has the feel of a material as a font and is easy to read can be generated.

Such coordinate notation character font data (X,Y,Z) is different from the technique to generate a normal character font that has been used from heretofore shown in Fig. 8. The character font data of the normal character font in Fig. 8 is formed by dividing a writing rectangular area ARX into horizontally A pieces by vertically B pieces of pixels and allocating black data (logic "1") or white data (logic "0") to the pixels: it always has A x B pieces of data array with respect to pixels in the entire writing rectangular area ARX. To distinguish the above data array from other character fonts, peculiar code data is allocated and this will be used for the transmission of character information.

On the contrary, in case of the character font data DFONT of Fig. 4, since the location data (X,Y) of the display points of each segment forming the character and the dot-shape data (Z) will be used as data for representing the character font, a correct font can be represented only by displaying the display points at the positions specified by the character font data (X,Y,Z).

Accordingly, in the character information transmission system of Fig. 1, the character font data DFONT shown in Fig. 4 can be represented in the terminal devices 3A, 3B ... used in an area (e.g. the United States) where a different natural language has been used from a natural language used in the area (e.g. Japan) of the terminal devices 2A, 2B, if only simply displaying the display points at the coordinate location of the three-dimensional data (X,Y,Z) on the image memory, and an inconvenience such as a ghost of character does not occur by that.

### (3) Coordinate Notation Character Font Generating Device

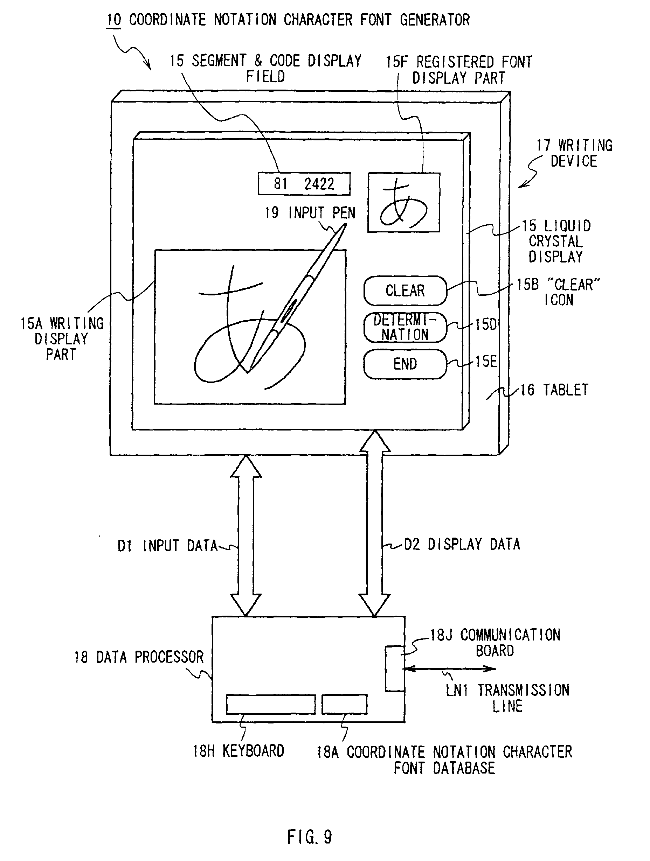

A coordinate notation character font generating device 10 has been formed as shown in Fig. 9 based on also the aforementioned generating principle of a coordinate notation character.

The coordinate notation character font generating device 10 has a writing device 17 which is composed of a liquid crystal display 15 and a tablet 16. Data processing is performed by a data processor 18 being a dedicated or a general-purpose personal computer, and thus generated coordinate notation character font data is stored in a coordinate notation character font database 18A.

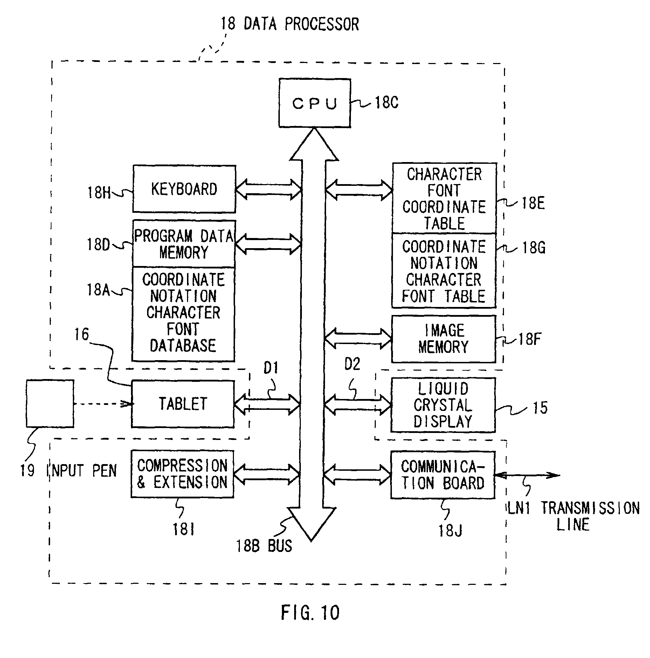

In the liquid crystal display 15 of the writing device 17, a writing display part 15A has been provided. If a character to generate is written by hand to the writing display part 15A with an input pen 19, input data D1 for representing the position where the above input pen 19 was contacted to the writing display part 15A and the strength of a penstroke is supplied to the bus 18B of the data processor 18 from the tablet 16 (Fig. 10).

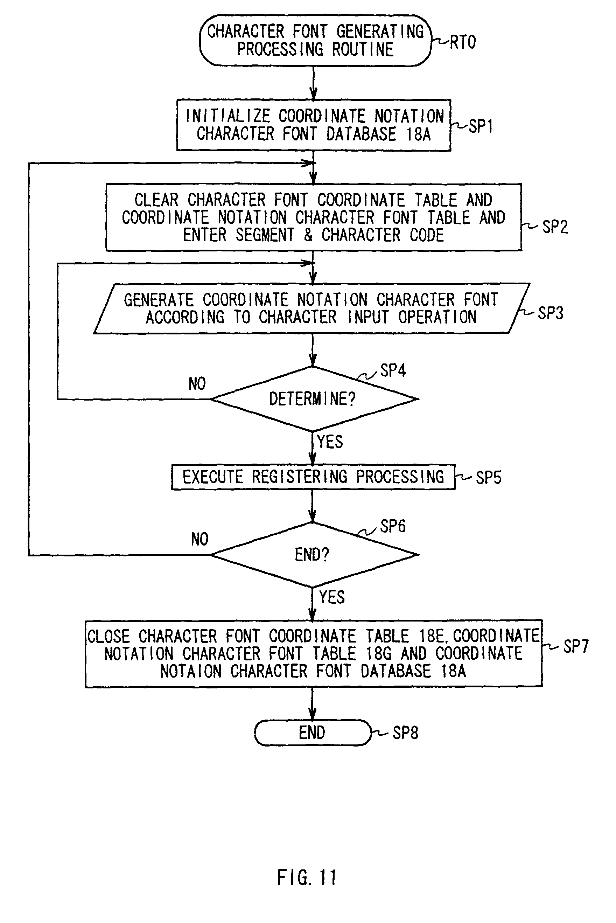

Coordinate notation character font data is stored in a character font coordinate table 18E, and at the same time, the input data D1 supplied to the bus 18B is written in an image memory 18F by that a central processing unit (CPU) 18C executes a character font generating processing routine RT0 shown in Fig. 11 according to program data stored in a program data memory 18D. The image data written in the image memory 18 is supplied to the liquid crystal display 15 as display data D2 to the writing display part 15A through the bus 18B. Thus, a character which was written on the writing display part 15A with the input pen 19 is displayed; a user can confirm the character font which he entered in this time.

As entering the character font generating processing routine RT0 (Fig. 11), in step SP1, the CPU 18C of the data processor 18 initializes the coordinate notation character font database 18A and changing the data processor 18 into a standby state to generate a new database.

Then, in step SP2, if the user clears a character font coordinate table 18E and a coordinate notation character font table 18G by clicking a "clear" icon 15B on the liquid crystal display 15 with the input pen 19 and enters the character font segment data and the character font code data of a character that will be generated with the keyboard 18H of the data processor 18, the CPU 18C writes and stores these character font segment data and character font code data in the character font coordinate table 18E as well as writes in the image memory 18F, and displaying them in a segment and code display field 15C on the liquid crystal display 15 (Fig. 9).

The character font segment data has been previously allocated to each area name using the above character (e.g. the name of country). In case of this embodiment, the Japanese hiragana character 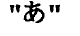 has been formed. So that "81" (the identification number of Japan) is entered as the character font segment data, and the character code data "242" (the character font code number of the hiragana character 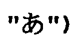 is entered. As the character font segment data and character font code data, data which has been generally used to transmit an electronic mail to the Internet as data for representing a normal character code will be adopted.

Then, in step SP3, the CPU 18C executes processing to generate a coordinate notation character font according to user 's character writing operation with the input pen 19.

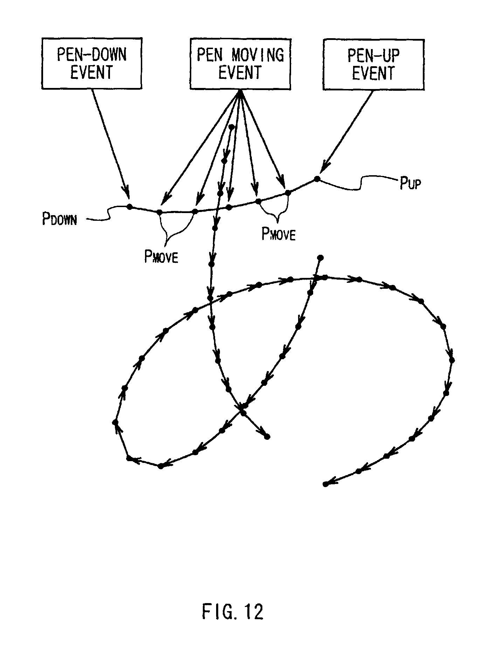

In this coordinate notation character font generating processing, as shown in Fig. 12, the CPU 18C executes data input at the time when the user executed the pen-down event to put the input pen 19 down on the writing display part 15A, data entering processing at the time when the user then executed the pen moving event generated by moving the pen, and data processing at the time when the above pen moving event has finished and the user executed the pen-up event by pulling up the input pen 19 from the writing display part 15A.

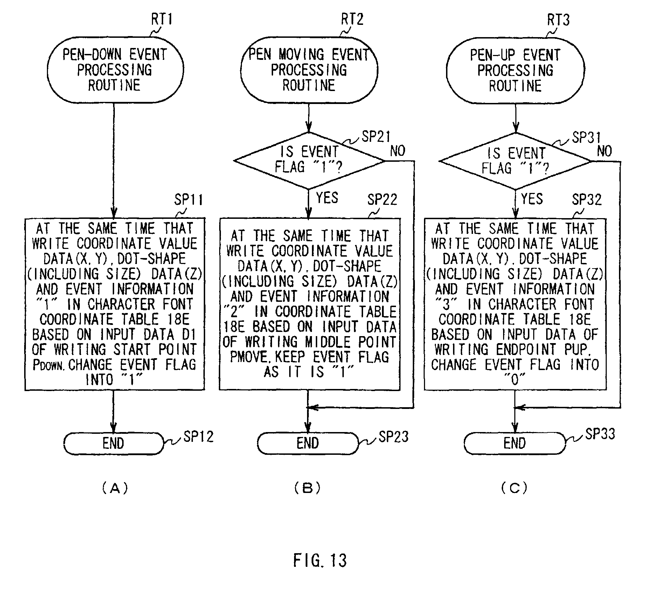

In the pen-down event, the CPU 18C enters pen-down event processing routine RT1 of Fig. 13(A), and in step SP11, it detects the writing start point PDOWN and writes the coordinate data (X,Y), the dot-shape (including the size information corresponding to the strength of the penstroke) data (Z) of the writing start point and event information "1" in the character font coordinate table 18E, and at the same time, executes processing to change an event flag to a logic "1" (to represent that the input pen 19 is in a writing state to the writing display part 15A). Thereafter, in step SP12, the above event pen-down processing routine is stopped.

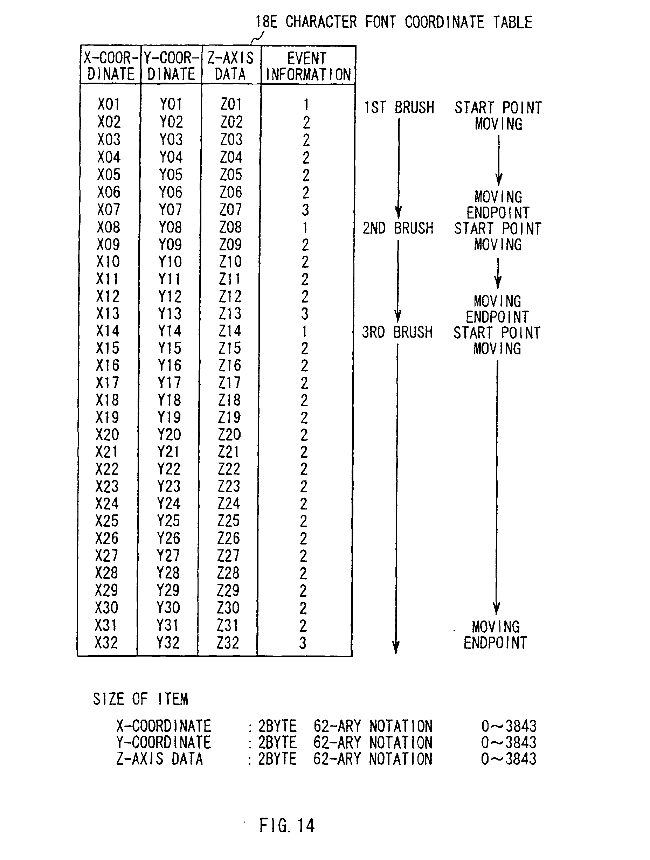

In this manner, as shown in Fig. 14, if the user performs the pen-down operation, with respect to the first display point, the CPU 18C stores the XY coordinate data (X01,Y01) of the writing start point PDOWN and the shape data (Z01) in the character font coordinate table 18E along with the event information "1".

Thereafter, if the user moves the input pen 19 in the horizontal direction from the writing start point PDOWN, the CPU 18C enters pen moving event processing routine RT2 shown in Fig. 13(B), and in step SP21, it determines whether an event flag is "1" or not.

Here, if an affirmative result is obtained, this means that the input pen 19 is performing an input operation and event processing is necessary. At this time, in step SP22, the CPU 18C writes coordinate data (X,Y) and a dot shape (data including size information corresponding to the strength of the penstroke) (Z) in the character font coordinate table 18E based on the input data of the writing middle point PMOVE, and at the same time, keeps the event flag as it is the logic "1" (to represent that the writing state by the input pen 19 is continuing).

After the above processing, in step SP23, the CPU 18C stops the processing of the above point moving event processing routine RT2.

As a result, in the character font coordinate table 18E (Fig. 14), the moving position of the input pen 19 and the dot shape and the event information are sequentially stored as data for representing the operated state of the input pen 19 at each display point (X02,Y02,Z02,2), (X03,Y03,Z03,2) ... (X06,Y06,Z06,2) while the input pen 19 is performing the moving operation (while event information is "2").

Then, if the user performs the pen-up operation of the input pen 19, the CPU 18C enters pen-up event processing routine RT3 shown in Fig. 13(C). At this time, in step SP31, the Cpu 18C determines whether the event flag is "1" or not. Here, if an affirmative result is obtained, this means that the input pen 19 is in the writing mode of the writing endpoint following the writing middle point PMOVE. The CPU 18C proceeds to step SP32 to write the coordinate data (X,Y), dot-shape (including the size) data (Z) and event information "3" in the character font coordinate table 18E based on the input data of the write endpoint PUP, and at the same time, executes processing to change the event flag to "0" (to represent that it is not in a writing processing state by the input pen 19).

In case of this embodiment, the tablet 16 intermittently transmits the input data D1 with respect to the writing position of the input pen 19 to the data processor 18 in a predetermined cycle. Responding to this, the CPU 18C repeatedly executes the processing of the pen-down event processing routine RT1, the pen moving event processing routine RT2 and the pen-up event processing routine RT3 with respect to the input data D1.

Then, in the next step SP33, the CPU 18C stops the above pen-up event processing routine RT3.

In this manner, as shown in Fig. 14, the CPU 18C stores the location data (X07,Y07) of the writing endpoint PUP and the Z-axis data (Z07) for representing the dot shape in the character font coordinate table 18E along with event information "3".

If the user performs the input operation of the first segment (i.e. the first stroke) to the writing display part 15A on the liquid crystal display 15 with the input pen 19, the CPU 18C stores the coordinate data (X,Y) of the writing start point PDOWN, the writing middle point PMOVE and the writing endpoint PUP and the Z-axis data (Z) for representing the dot shape in the character font coordinate table 18E along with the event information "1", "2" or "3".

Following this, if the user performs the input operation of the second segment (i.e. the second stroke), responding to this, the CPU 18C fetches the data (X,Y) based on the writing start point PDOWN, the writing middle point PMOVE and the writing endpoint PUP and the Z-axis data (Z) for representing the dot shape in the character font coordinate table 18E along with the event information "1", "2" or "3".

Also with respect to the third segment (the third stroke), similarly, the CPU 18C stores the coordinate data (X,Y) based on the input data of the writing start point PDOWN, the writing middle point PMOVE and the writing endpoint PUP and the Z-axis data Z for representing the dot shape in the character font coordinate table 18E along with the event information "1", "2" or "3".

In case of this embodiment, as the coordinate data (X,Y) at each point, values 0 to 4095 of 2 byte 64-ary notation (0, 1, 2 ... 8, 9, A, B, C ... X, Y, Z, a, b, c ... x, y, z, :, ;) will be used. Also with respect to the Z-axis data (Z), similarly, the values 0 to 4095 of 2 byte 64-ary notation can be taken.

If the user finishes the execution of the data fetch processing in the character font coordinate table 18E based on the input data with respect to the display points of each segment, in step SP4 (Fig. 11), the CPU 18C determines whether the user operated a "determination" icon 15D on the liquid crystal display 15 (Fig. 9) or not. If a negative result is obtained, the CPU 18C proceeds to the aforementioned step SP3 to execute the next processing.

If the data fetching of one segment has finished, in step SP32 of the pen-up processing routine RT3 of Fig. 13(C), processing to change the flag to a logic "0" is executed. Thereby, the CPU 18C then gets into the state where it does not fetch useless data by stopping the data fetching processing of step SP22 or SP32.

If the user soon performs the operation of the "determination" icon 15C, an affirmative result can be obtained in step SP4, so that the CPU 18C proceeds to step SP5 to execute registering processing.

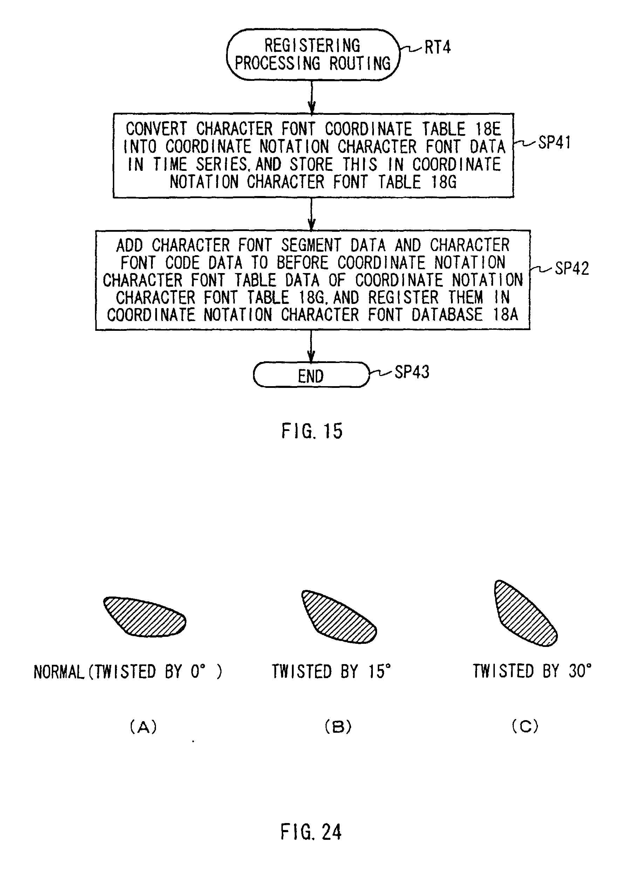

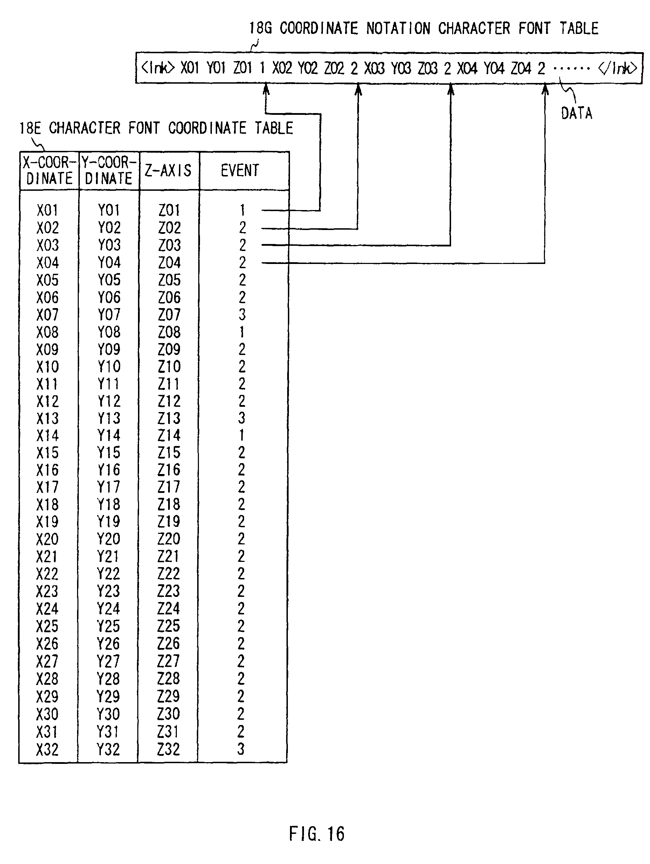

At this time, the CPU 18C enters registering processing routine RT4 of Fig. 15. In step SP41, as shown in Fig. 16, the CPU 18C converts the coordinate data (X,Y) and the Z-axis data (Z) for representing the dot shape and the event information "1" to "3" (Fig. 14) in the character font coordinate table 18E into coordinate notation character font data DATA in time series and stores in the coordinate notation character font table 18G.

This time-series coordinate notation character font data DATA is to convert the data stored in the character font coordinate table 18E for each display point into coordinate notation in a character unit. This data has a data configuration that the three-dimensional data (X,Y,Z) of the display points included in all of the segments of each character and the event information 1, 2 or 3 have been aligned according to the procedure of the input operation and the data for the above one character has been sandwiched by tags 〈Ink〉.

Next, the CPU 18C proceeds to step SP42 to add character font segment data and the character font code data to before the coordinate notation character font data in the coordinate notation character font table 18G and register them in the coordinate notation character font database 18A. Thereafter, in step SP43, the CPU 18C stops the above registering processing routine RT4.

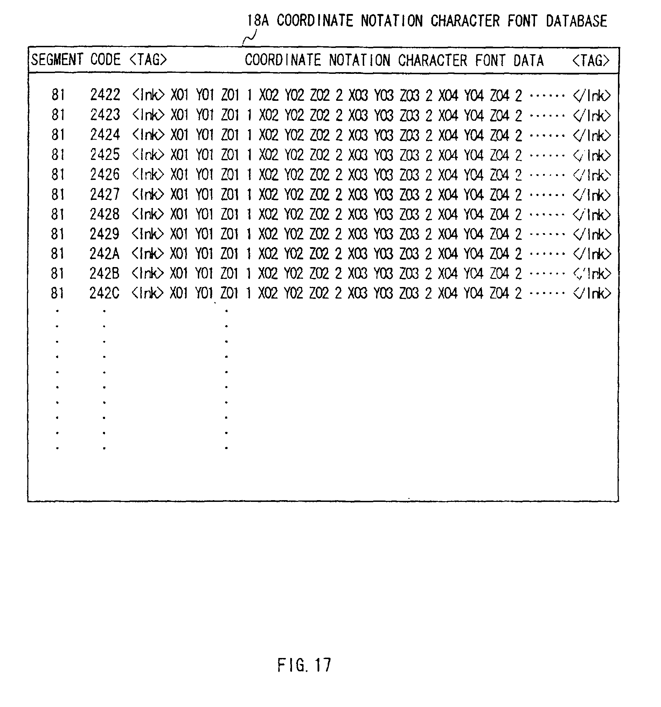

As a result, as shown in the first line of Fig. 17, the CPU 18C aligns the coordinate notation character font data DATA in which the tags 〈Ink〉 (these tags represent being a coordinate notation character font) are inserted before and after, following the character font segment data "81" (the identification number of Japan) and the character font code data "2422" (the identification number of the hiragana character

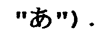

If the registration of one character from the coordinate notation character font table 18G in the coordinate notation character font database 18A has completed, in the next step SP6 (Fig. 11), the CPU 18C determines whether the registration of character fonts has completed or not.

Here, if the operator does not operate an "end" icon 15E on the liquid crystal display 15 (Fig. 9) with the input pen 19, the CPU 18C returns to the aforementioned step SP2 to continuously execute the registering processing of another character: clear the data remained in the character font coordinate table 18E and the coordinate notation character font table 18G that have been written with respect to the last character, and then repeat the input of the three-dimensional data (X,Y,Z) with respect to the next character and its registering processing. In this manner, the registering processing of the coordinate notation character font data to the characters in the second line or below of Fig. 17 in the coordinate notation character font database 18A is executed.

If the user clicks the "end" icon 15E by the input pen 19, the CPU 18C proceeds to the next step SP7 to close the character font coordinate table 18E, the coordinate notation character font table 18G and the coordinate notation character font database 18A. And then, in step SP8, the CPU 18C stops the above character font generating processing routine RT0.

In case of this embodiment, the three-dimensional data (X,Y,Z) and the event data "1", "2" or "3" of the segment part of each character font registered in the coordinate notation character font database 18A will be displayed in the writing display part 15A, and at the same time, the registered character font will be displayed in the registered font display part 15F on the liquid crystal display 15. Thereby, the user can correct the shape or the size of the registered font while confirming.

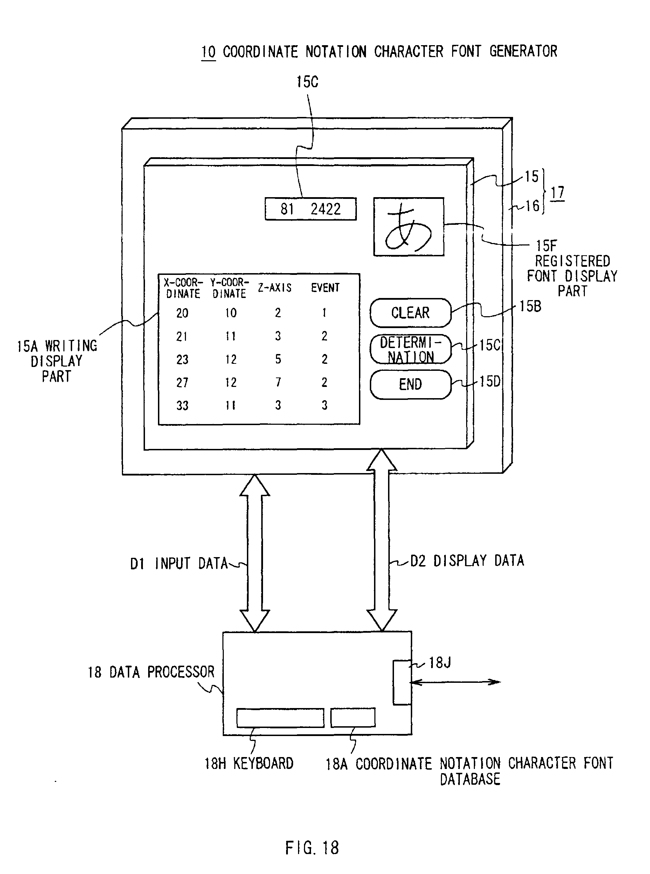

That is, when correcting a part of the registered character displayed in the registered font display part 15F, as shown in Fig. 18, the user displays the three-dimensional data (X,Y,Z) being the display point of the segment part in the writing display part 15A and changes the numeric value using the keyboard 18H of the data processor 18. Thereby, the data in the coordinate notation character font database 18A can be corrected. Thus, the shape of the character or the size of the registered font can be corrected.

According to the coordinate notation character font generating device 10 having the above configuration, as character information to be transferred through the Internet 4, the coordinate notation character font data for specifying the coordinate data (X,Y) that intermittently represent the location of the display points of each segment forming a character font as the first dimensional and the second dimensional data, and also specifying the character font by using the Z-axis data (Z) that represent the dot shape of the above display points as the third dimensional data, will be generated. Thereby, character font data which can specify a character by the coordinate data for representing the display positions of the display points can be generated.

Furthermore, the coordinate notation character font data registered in the coordinate notation character font database 18A of the coordinate notation character font generating device 10 (Fig. 10) can be transmitted to the Internet 4 through the communication board 18J and a transmission LN1 after compressed by the compressing and extending unit 18I. Therefore, it can be downloaded onto document processing devices connected to the Internet 4, e.g. the character font converting servers 8, 9 ...

### (4) Terminal Device

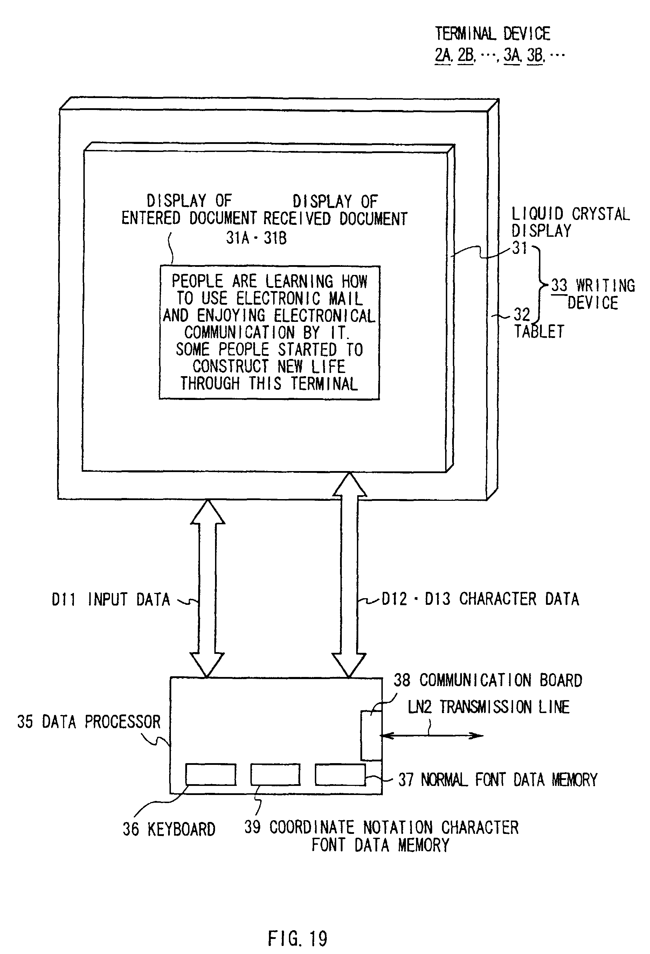

As shown in Fig. 19, in the terminal devices 2A, 2B ..., 3A, 3B ..., ..., data can be entered to a data processor 35 having the configuration of a personal computer by means of a keyboard 36 to a writing device 33 composed of a liquid crystal display 31 and a tablet 32. The data processor 35 displays character data D12 on the liquid crystal display 31 as display of input document 31A as well as stores in a normal font data memory 37. The character data thus stored in the normal font data memory 37 is transmitted from a communication board 38 to a transmission line LN2 as electronic mail data.

Furthermore, the data processor 35 stores document data received by the communication board 38 from the transmission line LN2 in a coordinate notation character font data memory 39 as well as supplies this document data to the liquid crystal display 31 as character data D13 to display it as a display of received document 31B.

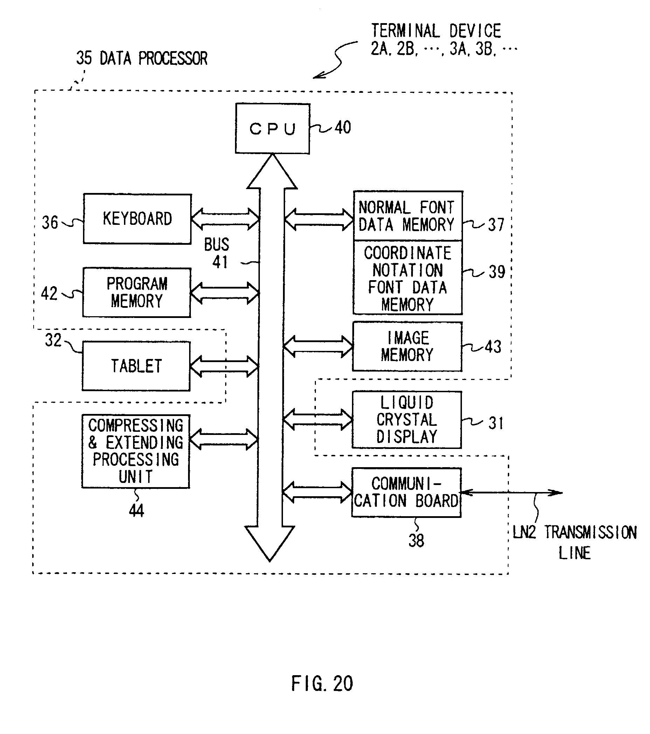

Such data processing in the data processor 35 will be performed by that a CPU 40 executes a program in a program memory 42 through a bus 41 as shown in Fig. 20.

In case of this embodiment, character data in normal font generated according to the key operation of the keyboard 36 is written in an image memory 43, so that a character in the above normal font is displayed on the liquid crystal display 31.

On the contrary, as described above with reference to Fig. 16, since in the character data written in the coordinate display font data memory 39 from the transmission line LN2, the location data of the display points of segments forming the character has been specified by the three-dimensional data (X,Y,Z) and the event data "1", "2" or "3", the CPU 40 writes each character data of the document data at the positions of the display points specified on the image memory 43. Thus, as described above with reference to Figs. 5 and 6, on the liquid crystal display 31, dots being a group of the display points specified by the Z-axis data (Z) are displayed on the basis of a display point P0 specified by the coordinate data (X,Y), so that each segment is sequentially drawn; each character is displayed.

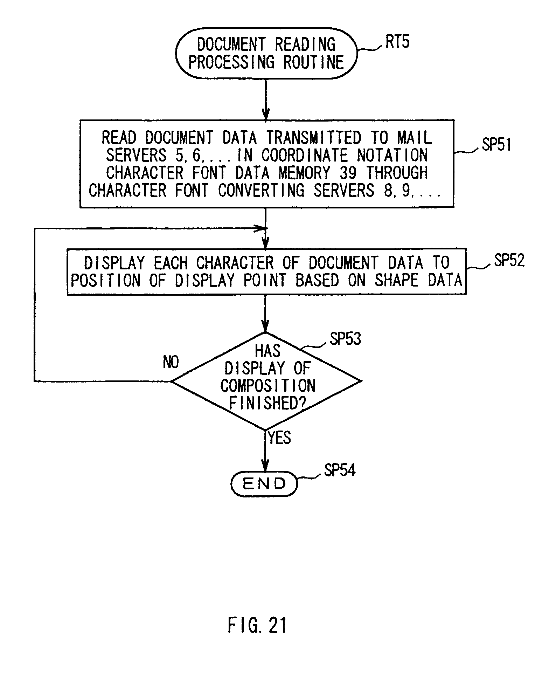

Such display of the coordinate notation font data is performed by that the CPU 40 of the data processor 35 executes document reading processing routine RT5 shown in Fig. 21.

When entering the document reading processing routine RT5, in step SP51, the CPU 40 reads the document data transmitted to mail servers 5, 6 ... connected to the above terminal devices 2A, 2B ..., 3A, 3B ..., ... through character font converting servers 8, 9, ... Thus obtained data is subjected to extending processing by a compressing and extending processing unit 44, and then the extended data is read in its own coordinate notation character font data memory 39.

At this time, the character font converting servers 8, 9, ... read the document data arrived to the mail servers 5, 6, ... as an electronic mail of normal font data according to a document information command transmitted from the CPU 40 of the data processor 35, converts it into coordinate notation font data by means of coordinate notation character font databases 8A, 9A ..., and transmits the data to the terminal devices 2A, 2B ..., 3A, 3B ..., ...

Thereafter, in the next step SP52, the CPU 40 displays each character in the document data at the positions of the display points based on the coordinate notation character font data (Fig. 6).

If the display of one character is finished, the CPU 40 determines whether the display of the document has finished or not in the next step SP53. When a negative result is obtained, the CPU 40 returns to the aforementioned step SP52 to execute the display processing of the next character.

In this manner, when the display of all of the document data read in the coordinate notation font data memory 39 has finished, the CPU 40 obtains an affirmative result in step SP53. In step SP54, the processing of the above character reading processing routine RT5 is stopped.

According to the above configuration, when in transmitting document data, the terminal devices 2A, 2B ..., 3A, 3B ..., ... generate normal font data by means of the keyboard 36, and transmits the document data in the form of normal font data to the mail servers 5, 6, ... connected to itself.

In this manner, the sending mail servers 5, 6, ... transmit the above document data in the form of normal font data to the mail servers 5, 6, ... connected to destination terminal devices through the Internet 4.

On the contrary, when in reading an electronic mail arrived to the mail server connected to itself, the terminal devices 2A, 2B ..., 3A, 3B ..., ... convert document data in the form of normal font data arrived to the mail servers 5, 6, ... into document data in a coordinate notation font data form by the character font converting servers 8, 9, ... and reading it in its own coordinate notation character font data memory 39.

In this manner, since the document data read in the coordinate notation font data memory 39 is represented by the location coordinates of the display points of each character, the CPU 40 can specify the display points at the corresponding location coordinates on the image memory 43 as they are, and each character of thus read character data can be correctly displayed on the image memory 43.

Accordingly, with respect to the document data read in its own coordinate notation font data memory 39, the CPU 40 can display each character of the transmitted document data on the display 31 only by performing the display processing of the display points that have been directly specified by the above coordinate notation font data, without performing a conversion into a character font code form.

Also when in reading a document provided to an information providing server 7 in a normal font code, the terminal devices 2A, 2B ..., 3A, 3B ..., ... read the document through the character font converting servers 8, 9 ... similarly to the case of reading a document from the mail servers 5, 6 ... Thus, the document in the information providing server 7 can be read as a document in the coordinate notation font data form. Thereby, right characters can be displayed on its own display.

### (5) Character Font Converting Server

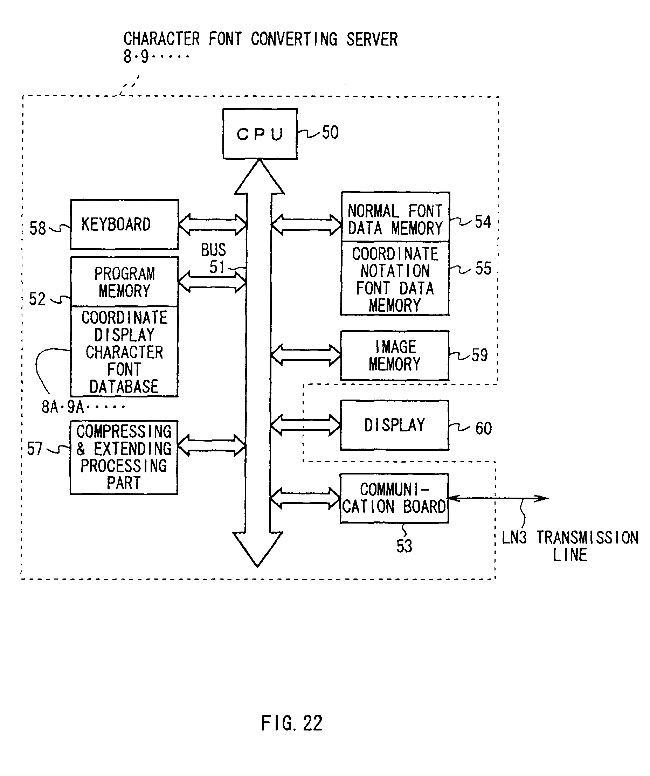

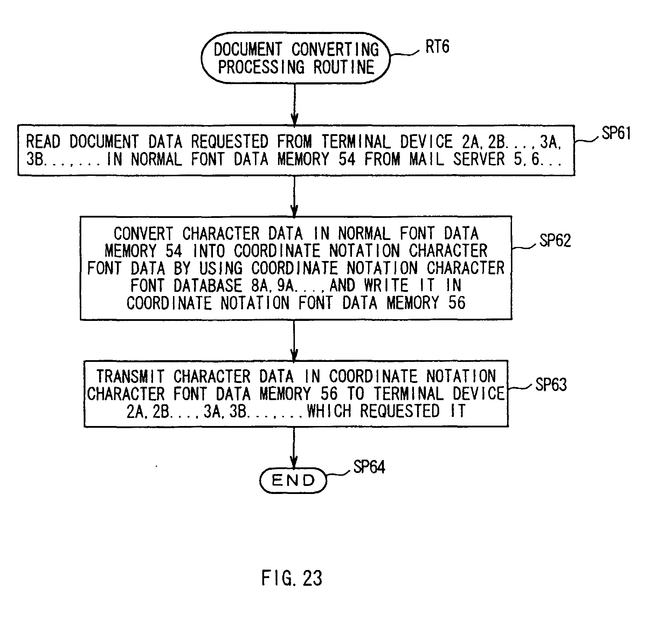

The character font converting servers 8, 9, ... are servers to transmit a specified document in the form of normal font data with converting into the document of coordinate data in the form of coordinate notation font data from connected mail servers 5, 6, ... to the terminal devices 2A, 2B ..., 3A, 3B ..., ... according to a document read command from the terminal devices 2A, 2B ..., 3A, 3B ..., ... As shown in Fig. 22, as the above processing operation, a central processing unit (CPU) 50 executes document converting processing routine RT6 shown in Fig. 23 by a program in a program memory 52 through a bus 51.

If a read command from the terminal device 2A, 2B ..., 3A, 3B ..., ... is received in a communication board 53 through a transmission line LN3, the CPU 50 reads the document data of a specified electronic mail from the mail server 5, 6, ..., from the transmission line LN3 through the Internet 4, and writes it in a normal font data memory 54.

Thus, in the normal font data memory 54, as the transmitted document data, a data row in which each character has been represented by font code data in the form of normal font data is obtained.

Then, in step SP62, the CPU 50 searches the coordinate notation character font database 8A, 9A ... for each character in the document data stored in the above normal font data memory 54 according to the normal font code, and reading corresponding coordinate notation character font data and writing in a coordinate notation font data memory 55.

After the coordinate notation character font data which corresponds to the normal font code has written in the coordinate notation font data memory 55 with respect to all of the characters stored in the normal font data memory 54, in step SP63, in the coordinate notation font data memory 55, the CPU 50 transmits the document data to the terminal device 2A, 2B ..., 3A, 3B ..., ... that sent the read request through the communication board 53, the transmission line LN3 and the Internet 4 with sequentially performing data compression on the document data in the coordinate notation font data memory 55 in a compressing and extending processing unit 57.

Then, the CPU 50 stops the processing of the above document converting processing routine RT6 in step SP64.

In case of this embodiment, the character font converting servers 8, 9, ... have the configuration of a personal computer. Therefore, when a user enters an operation command with a keyboard 58, the progress of the processing or the like can be displayed on a display 60 as the occasion demands through an image memory 59.

According to the above configuration of the character font converting servers 8 and 9, when the user of the terminal device 2A, 2B ..., 3A, 3B ..., ... reads an electronic mail to him from the mail server 5, 6, ..., the document data arrived in the form of normal font data can be transmitted to the terminal device 2A, 2B ..., 3A, 3B ..., ... as character data in the form of coordinate notation font data by means of the data of the coordinate notation character font database 8A, 9A ...

Thus, the character content shown in the arrived electronic mail is transmitted to the terminal device 2A, 2B ..., or 3A, 3B ..., ... that do not have a coordinate notation character font database for converting the form of font data as display point data as it is, and it can be displayed on the display of that terminal device.

### (6) Operation and Effects of Character Information Transmission System

In a character information transmission system 1 having the above configuration, with respect to the terminal devices 2A, 2B ..., 3A, 3B ... that have been connected to the Internet 4, for instance document data written in Japanese is transmitted as an electronic mail through the Internet 4 from the terminal device 2A, 23 ... in the area where Japanese has been used as a natural language to the terminal device 3A, 3B ... in the area where English has been used as a natural language.

Here, as described above with reference to Figs. 5 and 6, the user of the sending terminal device 2A, 2B ... tries to transmit a document formed by a brush character as written by a brush to the destination terminal device 3A, 3B ...

At this time, a coordinate notation character font generating device 10 executes the character font generating processing routine RT0 shown in Fig. 11, and previously preparing (downloading) the data of a coordinate notation character font database 18A (Fig. 17) that has coordinate notation character font data generated in the coordinate notation character font table 18G (Fig. 10) with respect to each character in a character font converting server 9 in the area where English has been used as a natural language as a database 9A.

In this state, when the user of the sending terminal device 2A, 2B ... in the Japanese area transmits the document in the coordinate notation character font, the terminal device 2A, 2B ... transmits the document data in the normal font data form with respect to each character to the Internet 4 through the mail server 5 according to the user's document forming operation, and this document data is transmitted to the mail server 6 connected to the destination terminal device 3A, 3B ...

Here, since the document data in the standard font data form is to transmit the normal font code data of each character, in the destination mail server 6, a document in which each character has been represented by a normal font code has been sent.

When the destination terminal device 3A, 3B ... reads the electronic mail sent to the mail server 6, the above destination terminal device 3A, 3B ... reads the above electronic mail in the mail server 6 through the character font converting server 9 that has been provided corresponding to the mail server 6.

At this time, the character font converting server 9 reads the document data of the specified electronic mail from the mail server 6, and retrieves the coordinate notation character font database 9A that itself has according to the data of each character of the above document data (being normal font data) and converting it into character data in the corresponding coordinate notation font data form, and transmitting the character data to the terminal device 3A, 3B ... that transmitted the request through the Internet 4.

At this time, since each character data transmitted from the character font converting server 9 is data for representing the location of the display points of each display character, the terminal device 3A, 3B ... can directly write the above data in the coordinate notation font form at the display coordinate location on the image memory 43 (Fig. 20).

Thus, the destination terminal device 3A, 3B ... can directly writes the character data transmitted from the character font converting server 9 in the image memory without needing the conversion of specification codes; when in performing the above processing, the form of the characters transmitted from the terminal device 2A, 2B ... can be displayed as it is on the terminal device 3A, 3B ... in an area where a different natural language has been used without occurring a ghost of character owing to the difference in conversion codes.

In the operation of the aforementioned character information transmission system 1, when in reading a transmitted electronic mail, the form of font data of each character is converted. However, also when in reading information from the information providing server (Web server) 7 connected to the Internet 4, the above operation for converting the form of font data is performed.

For instance, when in reading the information in the information providing server 7 from the terminal device 3A, 3B, ..., the terminal device 3A, 3B ... reads the information in the information providing server 7 through the character font converting server 9.

At this time, the character font converting server 9 reads the information data stored in the information providing server 7 in the normal font data form inside, and then converts the form of font data using the coordinate notation character font database 9A and transmitting the converted data to the terminal device 3A, 3B ...

The terminal device 3A, 3B ... can display the information in the normal font data form read from the information providing server 7 on the display 31 (Fig. 20) as a character form converted in the coordinate notation character font database 9A (in this case, a brush character).

In case of the embodiment of Fig. 1, also in the character font converting server 8 corresponding to the mail server 5 connected to the transmitting terminal device 2A, 2B ..., the coordinate notation character font database 8A has been provided. Therefore, when the user of the transmitting terminal device 2A, 2B ... forms a document to transmit, a character in the above coordinate notation character font data form can be displayed on its own display 31 (Fig. 20).

In this case, the terminal device 2A, 2B ... transmits the character data in the normal font data form entered every time when a character was specified with the keyboard 36 to the character font converting server 8, and converts the character font data form into the coordinate notation font data form using the coordinate notation character font database 8A, and returning the converted data to the terminal device 2A, 3B ... in which the document is formed.

At this time, the terminal device 2A, 2B ... writes the returned font data in the coordinate notation font data memory 39 (Fig. 20) and also writes the above coordinate notation font data in the image memory 43 as it is; a brush character can be displayed on the display 31.

Therefore, the user using the transmitting terminal device 2A, 2B ... can confirm the document of the electronic mail that he himself will transmit on the display of his using terminal device; a service further improved in quality can be provided to the user.

### (7) Other Embodiments

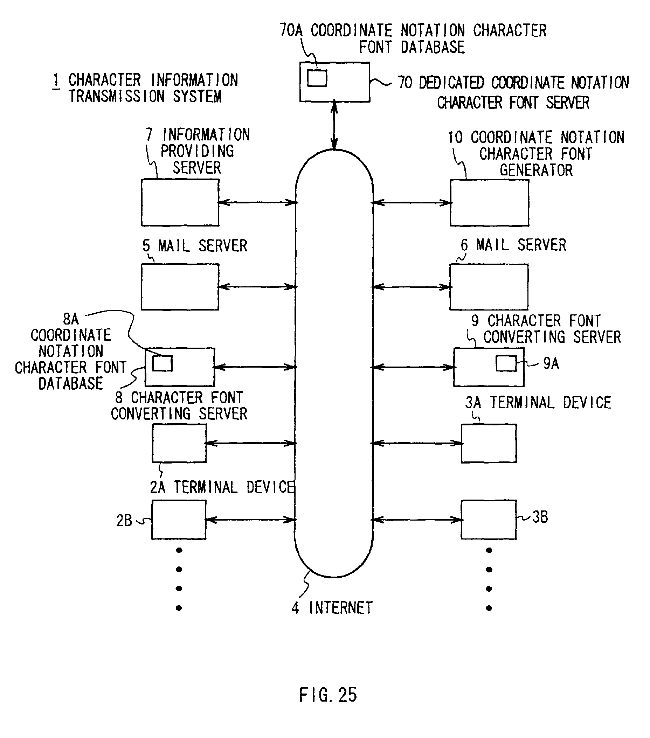

(1) In the aforementioned embodiment, it has dealt with the case where a character font converting server having a coordinate notation font database has been provided with respect to one kind a character by brush. However, the present invention is not only limited to this but also if a coordinate notation character font database for representing the display position of various character fonts used in all the world is provided, even if the document data of character data in any character form is transmitted (even if it is a language or a symbol which cannot be understood in a receiving area), this can be correctly displayed on a receiving terminal device.
(2) In the aforementioned embodiment, it has dealt with the case where a coordinate notation character font database constructed in the coordinate notation character font generating device 10 is downloaded onto the character font converting servers 8 and 9 through the Internet 4. However, a method of distributing the coordinate notation character font database is not only limited to this but also various methods such that installs after recording on a recording medium and distributing, or previously preinstalls when the character font converting server is generated, or the like can be adopted.
(3) In the aforementioned embodiment, it has dealt with the case where the coordinate notation character font database has been provided in the character font converting server. For example, however, with respect to the terminal devices 2A, 2B ..., 3A, 3B ..., ... that have been formed by personal computers having a large memory capacity, the same effects as the aforementioned case can be obtained also if it is provided in the above terminal devices.
(4) In the aforementioned embodiment, it has dealt with the case where as shown in Fig. 4, a space between coordinate points is interpolated by intermittently determining the coordinate value (X,Y) of coordinate points in each segment and defining the kind of the pen-shape data PT1, PT2 or PT3 to each coordinate point as the third dimensional dot-shape data. However, an interpolation method is not only limited to this but also various methods such that connects the space between coordinate points with a straight line having a predetermined thickness, or connects the space between coordinate points with a line operated by spline function, or the like can be adopted.
(5) In the aforementioned embodiment, as coordinate notation font data for representing each segment, the coordinate values X arid Y of a coordinate point are specified as the first dimensional and the second dimensional data and at the same time, the kind of the dot-shape data of the coordinate point is specified as the third dimensional data. In addition to this, however, as shown in Figs. 24(A), 24(B) and 24(C), data (X,Y,Z,θ) in which dot-shape twisting angle data (θ) for specifying to twist the dot shape by a specified angle, e.g. 0° , 15° or 30° has been added as fourth dimensional data may be used. By doing so, coordinate notation font data by which a part having a shape as a brush has twisted in a character by brush can be properly represented can be generated.
(6) In the aforementioned embodiment, as data input means, a liquid crystal display is put on a tablet, so that the input of location data with a pen device and the display of the inputted location data is performed. However, input means is not only limited to this but also other input means having various configurations such that a tablet and a display are formed in one body, or as a graphical user interface (GUI) display, location data will be entered by displaying a display point and a cursor on a display screen and moving the above cursor with a mouse, or the like can be adopted.
(7) In the aforementioned embodiment, the configuration in which coordinate value (X,Y) data is entered from the display device is adopted. However, the present invention is not only limited to this but also it may be designed so that the coordinate value (X,Y) data can be entered by another numerical data input means such as a keyboard. Also in this manner, the same effects as the aforementioned case can be obtained.
(8) In the aforementioned embodiment, the display position (X,Y) of a coordinate point that writing middle points PMOVE of each segment forming a character (Fig. 4) were intermittently taken at predetermined intervals are sequentially transmitted. In place of this, however, a method that thins the writing middle points PMOVE for a predetermined number and transmits arid then represents the thinned writing middle points PMOVE in a destination terminal device by interpolation by using, for example spline function. Thereby, an amount of data transmission to be transmitted on the Internet network can be further compressed.
(9) In the aforementioned embodiment, document data is read from the mail server 5, 6 ... or the information providing server 7 through the character font converting server 8, 9 ... and transmitting the document data converted into the coordinate notation character font data to the terminal devices 2A, 2B ..., 3A, 3B ..., ... In addition to this, as shown in Fig. 25, when a dedicated coordinate notation character font server 70 having a coordinate notation character font database 70A is connected to the Internet 4 as an Web server and the terminal device 2A, 2B ..., 3A, 3B ..., ... reads a document from the mail server 5, 6 ... or the information providing server 7, the coordinate notation character font data may be downloaded onto the terminal device from the dedicated coordinate notation character font server 70 for each character and displayed on the display of the terminal device.
   Thereby, a necessary amount of coordinate notation character data can be supplied to the terminal device when the terminal device demands.
   On the contrary, in the case where a terminal device has a memory in a sufficient scale, a coordinate notation font database may be downloaded from the dedicated coordinate notation character font server 70 to the terminal device that sent a request to perform converting processing in the terminal device.
   Thereby, a service to supply a necessary coordinate notation character font data can be easily provided to a terminal device needing this.
   With respect to the downloaded coordinate notation character font data, it can be designed so that the terminal device stores this, and then uses as the occasion demands.
(10) In the aforementioned embodiment, it has dealt with the case where as shown in Fig. 17, as the coordinate notation character font data, the dot-shape data (Z) being a group of display points is always added to the coordinate location data (X,Y) being the first dimensional and the second dimensional data as the third dimensional data and transmitted them to the terminal device 2A, 2B ..., 3A, 3B ... Instead of this, however, it may be designed so that an identification code for representing the type points has been allocated to the dot-shape data (Z) being a group of the display points and the above dot-shape identification code is transmitted as third dimensional data, and at the same time, the dot-shape data being a group of display points has been separately supplied to the terminal device 2A, 2B ..., 3A, 3B ... (for instance, previously downloaded from the coordinate notation character font generating device 10 (Fig. 1) or the dedicated coordinate notation character font server 70 (Fig. 25)).

In the above configuration, when in reading a document from the mail server 5, 6 ... or the information providing server 7 through the character font converting server 8, 9 ..., the terminal device receives the coordinate location data (X,Y) as first dimensional and second dimensional data, as well as selects the dot-shape data (Z) being a group of display points, that has been previously downloaded, based on the identification code of the data (Z) transmitted as the second dimensional data and displaying on the display.

Thereby, an amount of transmission of document to be transmitted on the Internet 4 can be further compressed. (11) In the aforementioned embodiment, it has dealt with the case where as shown in Fig. 17, as the coordinate notation character font data, the dot-shape data (Z) being a group of display points is always added to the coordinate location data (X,Y) being the first dimensional and the second dimensional data as the third dimensional data and transmitted to the terminal device 2A, 2B ..., 3A, 3B ... Instead of this, however, it may be designed so that as the third dimensional data, display point data for representing the outline of a dot shape is transmitted and processing to paint a color in the above outline is executed in the receiving terminal device and forming a dot shape.

Thereby, a transmission amount of data to be transmitted on the Internet 4 can be compressed.

### Industrial Applicability

The present invention can be applied to a character information transmission system for transmitting an electronic document (e.g., a document by a word processor, information in a home page, an electronic document, an electronic mail, etc.) through the Internet.

### Explanation of Reference Numerals

1 ... character information transmission system, (2A, 2B...), (3A, 3B...) ... terminal device, 4 ... Internet, 5, 6 ... mail server, 7 ... information providing server, 8, 9 ... character font converting server, 8A, 9A, 18A ... coordinate notation character font database, 10 ... coordinate notation character font generator, 15 ... liquid crystal display, 15A ... writing display part, 15B ... "clear" icon, 15C ... segment & code display field, 15D ... "determination" icon, 15E ... "end" icon, 16, 32 ... tablet, 17, 33 ... writing device, 18, 35 ... data processor, 18B ... bus, 18C ... CPU, 18D ... program data memory, 18E ... character font coordinate table, 18F, 43 ... image memory, 18G, 39, 55 ... coordinate notation character font table, 18J, 38, 53 ... communication board, 19, 34 ... input pen, 37, 54 ... normal font data memory.

## Claims

1. A character information transmission system for transmitting document data from a sending terminal device to a destination terminal device through a transmission network, comprising;
character font converting means for converting the document data transmitted from said sending terminal device into coordinate notation character font data that is composed of coordinate data (X,Y) for representing the display positions of the display points of the segments of each character forming the above document data and interpolation display data (Z) in which a space between said display points has been interpolated, and transmitting that to said destination terminal device.

2. The character information transmission system according to Claim 1, wherein;
said character font converting means is connected to said transmission network, and first document transmission data in which each character forming said document data has been represented by character data in the form of normal font data is transmitted from said sending terminal device to said character font converting means by code data for mnemonically displaying a character font, and said coordinate notation character font data is transmitted from said character font converting means to said destination terminal device as second document transmission data.

3. The character information transmission system according to Claim 1 or 2, wherein;
said character font converting means has been provided in said destination terminal device.

4. A character font converting apparatus wherein;
first document data transmitted from a sending terminal device through a transmission network is converted into second document data in which the segments of each character forming the above first document data are represented by coordinate notation character font data that is composed of coordinate data (X,Y) for representing the display positions of display points and interpolation display data (Z) in which a space between said display points has been interpolated, so as to be able to be displayed on the display of a destination terminal device.

5. The character font converting apparatus according to Claim 4, wherein;
a coordinate notation character font database which has said coordinate notation character font data corresponding to said each character, and retrieves this according to said first document data corresponding to said each character and outputting said corresponding coordinate notation character font data.

6. A method of generating document data comprising the steps of:
selecting, with respect to each character forming the document of first document data transmitted from a sending terminal device, a second display point on a position intermittently separated from among a series of first display points for displaying the segments of said each character, and generating first and second coordinate data (X,Y) which represent the coordinate location of the above second display point;
generating interpolation display data (Z) in which a space between said two second display points represented by said first and second coordinate data (X,Y) that are mutually next to has been interpolated and displayed with plural third display points; and
generating second document data for displaying the document on the display of a destination terminal device by said first and second coordinate data (X,Y) and said interpolation display data (Z).

7. The method of generating document data according to Claim 6, wherein;
said first and second coordinate data (X,Y) and said interpolation display data (Z) will be generated at a pen-down event to put writing means on the writing start point of said segment, a pen moving event to move said writing means from said writing start point and a pen-up event to detach said writing means from the writing endpoint of said segment.

8. The method of generating document data according to Claim 6, wherein;
said interpolation display data is represented by a value according to the strength of a penstroke of writing means.

9. A character information transmission system for transmitting document data through a transmission network, wherein:
a coordinate notation character font server having a coordinate notation character font database that has coordinate data (X,Y) in which the display positions of the display points of the segments of each character forming said document data and interpolation display data (Z) in which a space between said display points has been interpolated, and a terminal device are connected to said transmission network; and
said coordinate notation character font server downloads said coordinate notation character font data onto said terminal device that transmitted the above request from said coordinate notation character font database through said transmission network, responding to a request from said terminal device.
